Europäisches Patentamt

European Patent Office

Office européen des brevets

(11) Numéro de publication: **0 058 594**
**B1**

# (12) FASCICULE DE BREVET EUROPEEN

(45) Date de publication du fascicule du brevet: **19.06.85**

(51) Int. Cl.⁴: **H 01 B 13/02**

(21) Numéro de dépôt: **82400175.4**

(22) Date de dépôt: **02.02.82**

(54) **Tête de pose simultanée de fibres optiques dans un support cylindrique rainuré et dispositif de fabrication d'éléments de câblage comportant une telle tête.**

(30) Priorité: **17.02.81 FR 8103062**

(43) Date de publication de la demande:
**25.08.82 Bulletin 82/34**

(45) Mention de la délivrance du brevet:
**19.06.85 Bulletin 85/25**

(84) Etats contractants désignés:
**BE CH DE GB IT LI**

(56) Documents cités:
**EP-A-0 003 930**
**EP-A-0 020 189**
**GB-A-1 544 690**
**GB-A-2 022 644**
**GB-A-2 023 060**

(73) Titulaire: **LIGNES TELEGRAPHIQUES ET TELEPHONIQUES L.T.T.**
**1, rue Charles Bourseul**
**F-78702 Conflans-Ste-Honorine (FR)**

(72) Inventeur: **Dubois, Gilles**
**173, Bld Haussmann**
**F-75360 Paris Cedex 08 (FR)**
Inventeur: **Hulin, Jean-Pierre**
**173, Bld Haussmann**
**F-75360 Paris Cedex 08 (FR)**

(74) Mandataire: **Weinmiller, Jürgen et al**
**Zeppelinstrasse 63**
**D-8000 München 80 (DE)**

Courier Press, Leamington Spa, England.

## Description

La présente invention se rapporte d'une manière générale à la fabrication d'éléments de câblage comportant chacun, sous une enveloppe de protection, un support cylindrique diélectrique armé le long de son axe et creusé de rainures, par exemple hélicoïdales à pas simple ou alterné, dans chacune desquelles est logée une ou plusieurs fibres optiques, et concerne plus particulièrement une tête de pose simultanée de fibres optiques dans un tel support cylindrique rainuré défilant en translation.

On connaît déjà des dispositifs permettant de poser simultanément une fibre optique dans chaque rainure d'un support cylindrique défilant en continu. On se reportera par exemple aux deux demandes de brevet européen déposées au nom de la Demanderesse et publiées respectivement le 5 septembre 1979 sous le n° 3930 et le 10 décembre 1980 sous le n° 20 189. Selon ces demandes, la tête de pose est montée tournante sur un axe et comporte des guide-fibres élastiques en forme d'aiguilles traversées chacune par une fibre optique, lesdits guides appuyant par une extrémité effilée au fond de chaque rainure du support cylindrique en translation et étant maintenus solidaires d'une monture entraînée en rotation.

Toutefois, une tête de pose du type décrit précédemment présente des inconvénients. En effet, il peut arriver qu'une fibre optique en sortie de son guide ne se positionne pas exactement dans la rainure correspondante, ce qui a pour effet de faire sortir ladite fibre de sa rainure. En outre, il peut également arriver que, lors de son guidage, une fibre optique vienne se loger dans une rainure autre que celle qui lui était normalement attribuée. Dès lors, on ne peut garantir une parfaite exécution de cette opération de pose d'une fibre optique dans chaque rainure du support cylindrique. D'autre part, du fait de l'emploi de guides relativement longs, il peut se produire un frottement entre une fibre optique et son guide, pouvant même entraîner un blocage de ladite fibre à l'intérieur du guide. De plus, cette tête de pose est d'une structure relativement complexe, ce qui augmente notablement son coût de fabrication.

La présente invention a pour but de remédier à ces inconvénients en proposant une tête de pose simultanée de fibres optiques dans un support cylindrique rainuré, qui est entièrement satisfaisante, d'une structure simple ne comportant plus les guide-fibres en forme d'aiguilles selon l'art antérieur, peu coûteuse, légère, et assurant une pose aisée d'une ou de plusieurs fibres dans chaque rainure du support cylindrique.

A cet effet, l'invention a pour objet une tête de pose simultanée de fibres optiques dans des rainures pratiquées sur le pourtour d'un support cylindrique, comportant un tube creux traversé longitudinalement par le support défilant en continu, cette tête étant caractérisée par le fait qu'elle comporte:

— une première pièce en forme de rondelle, de diamètre supérieur à celui du tube, solidaire et axialement alignée avec le tube, et percée d'une ouverture centrale permettant le passage du support, cette ouverture présentant une bordure intérieure pourvue de parties saillantes radiales en nombre égal à celui des rainures du support, de sorte que chaque partie saillante repose sensiblement au fond d'une rainure, cette pièce en forme de rondelle comprenant des encoches radiales pratiquées sur son pourtour et réparties suivant le même écartement angulaire que les parties saillantes de la bordure, de sorte que chaque fibre optique s'engage dans une encoche et se positionne par rapport à une rainure du support; et

— une pièce cylindrique d'insertion des fibres optiques dans les rainures du support, rendue solidaire de la pièce en forme de rondelle, percée d'une ouverture centrale alignée avec celle de la pièce en forme de rondelle, permettant le passage du support, cette pièce d'insertion appliquant chaque fibre dans une rainure du support.

On comprend qu'ainsi l'ouverture rainurée de la pièce en forme de rondelle permettra à chaque fibre optique de venir se positionner avec précision par rapport à sa rainure correspondante du support. De plus, lors d'une sortie éventuelle d'une fibre optique de sa rainure, la pièce d'insertion permettra de rabattre ladite fibre dans sa rainure.

L'invention vise également un dispositif de fabrication d'éléments de câblage comportant une tête de pose selon l'invention, ce dispositif étant caractérisé par le fait que, pour une tête de pose montée tournante, des moyens sont prévus pour asservir angulairement la tête de pose par rapport à un plateau tournant supportant des bobines de fibres optiques.

D'autres caractéristiques et avantages de l'invention apparaîtront mieux dans la description qui suit et se réfère aux dessins annexés donnés uniquement à titre d'exemple et dans lesquels:

— la figure 1 est une vue en coupe transversale d'un élément de câblage à fibres optiques;

— la figure 2 représente une vue en perspective éclatée de la tête de pose selon l'invention; et

— la figure 3 est une vue en coupe longitudinale du dispositif de fabrication d'éléments de câblage, comportant la tête de pose représentée sur la figure 2.

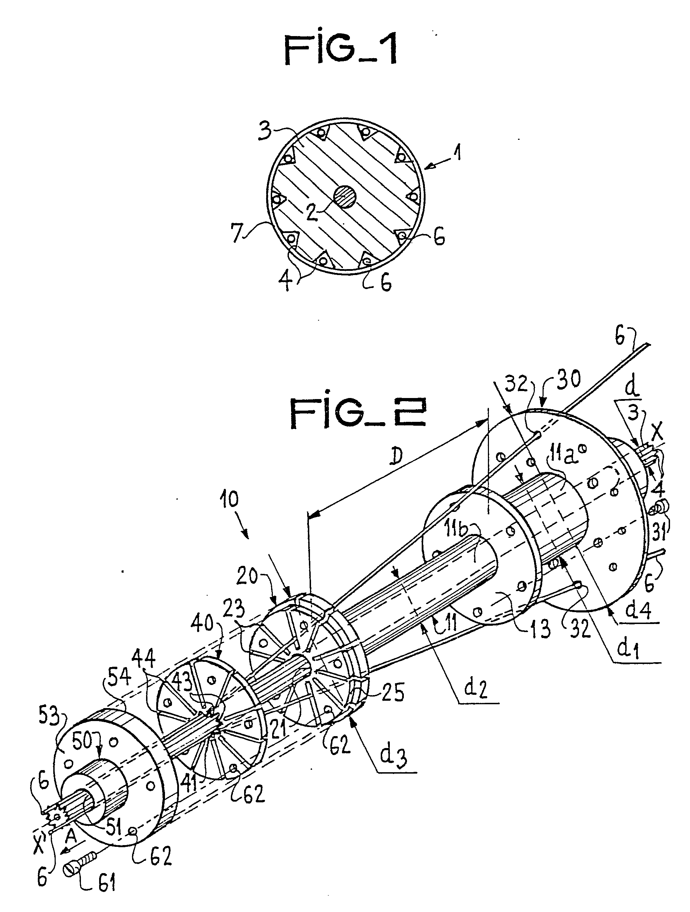

Suivant un exemple de réalisation et en se reportant à la figure 1, on a représenté en 1 un élément de câble terminé à fibres optiques. Cet élément de câble 1 comporte une armature ou âme centrale 2 destinée à rigidifier le câble et à absorber les contraintes longitudinales, autour de laquelle est disposé un support ou jonc cylindrique diélectrique 3 pourvu de rainures 4, par exemple au nombre de dix, hélicoïdales à pas simple ou alterné, de pas généralement assez grand devant le diamètre du support. Les rainures 4, à profil par exemple en forme de V, sont distribuées uniformément sur la surface externe du support 3. A l'intérieur de chaque rainure 4 est insérée ou logée au moins une fibre optique 6, et on a représenté en 7 l'enveloppe de protection de câble 1.

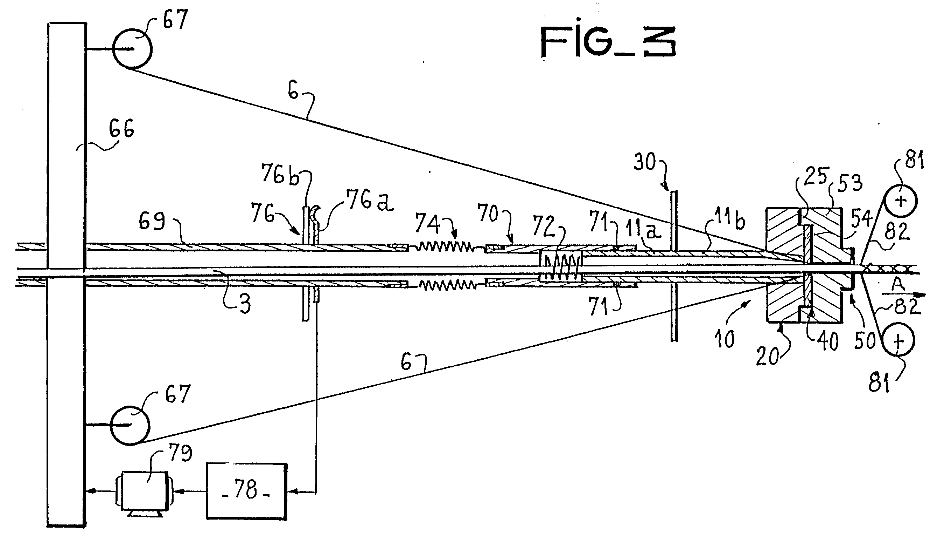

L'operation consistant à loger simultanément les fibres optiques 6 dans les rainures 4 du support cylindrique défilant en translation, est effectuée par la tête de pose selon l'invention, représentée sur la figure 2, et que l'on va maintenant décrire.

Cette tête de pose, globalement repérée 10, comporte un tube creux, d'axe XX', par exemple en aluminium, et traversé longitudinalement par le support cylindrique 3 creusé par exemple de dix rainures hélicoïdales à pas simple 4, ledit support 3 défilant en continu suivant le sens de la flèche A représentée sur la figure 2. Le tube 11 est constitué d'une première partie cylindrique 11a, de diamètre $d_1$, se prolongeant par une seconde partie cylindrique 11b, de diamètre $d_2$ inférieur à $d_1$, et sensiblement supérieur au diamètre $d$ du support 3.

Le tube 11 se termine par une première filière cylindrique 20, par exemple en aluminium, de même axe XX' que le tube 11, et destinée au centrage du support cylindrique rainuré 3. Cette filière de centrage 20, en forme de rondelle, a un diamètre $d_3$ supérieur à celui du tube 11, et constitue une même pièce avec la partie de tube 11b.

La pièce de centage 20 comporte une ouverture centrale 21, de diamètre sensiblement égal à celui du support 3, permettant le passage de celui-ci, et une pluralité d'encoches radiales 23 pratiquées sur son poutour, en nombre égal à celui des rainures 4 du support 3 (dix dans l'exemple choisi), et répartiés suivant le même écartement angulaire que lesdites rainures du support 3. Chaque encoche 23 de la pièce 20, de largeur sensiblement supérieure au diamètre des fibres optiques 6 est creusée depuis la périphérie de ladite pièce jusqu'au voisinage de l'ouverture centrale 21.

La pièce de centrage 20 comporte également un épaulement circulaire 25 dans lequel sont pratiquées les mêmes encoches radiales 23.

Sur le tube 11, et plus précisément au niveau de la jonction des deux parties de tube 11a et 11b, est montée coaxialement une pièce annulaire formant support 13 sur laquelle vient s'appuyer une pièce en forme de rondelle 30, jouant le rôle de filière, par exemple en téflon ou en acier poli, de diamètre $d_4$ supérieur à celui de la pièce de centrage 20, et espacée de cette dernière d'une distance D.

Cette filière 30 est rendue solidaire de la pièce formant support 13 par des moyens de fixation, tels que par exemple des vis 31.

La filière 30 est percée d'orifices 32 répartis sur son pourtour suivant le même écartement angulaire que les encoches 23 de la pièce de centrage 20. Ainsi, les fibres optiques 6 pénètrent dans leurs orifices respectifs 32 de la filière 30 en étant prépositionnées angulairement, puis convergent en faisceau vers la fillière de centrage 20 en s'engageant dans les encoches correspondantes 23.

On notera que les orifices 32 peuvent être avantageusement remplacés par des rainures radiales se terminant par une partie arrondie formant logement, sans sortir du cadre de l'invention. En effet, de telles rainures permettent à l'opérateur de charger rapidement et aisément la filière 30 en fibres optiques.

La tête de pose 10 comporte également une troisième filière 40 en forme de rondelle, par exemple en acier, de même diamètre que l'épaulement 25 de la filière de centrage 20, et destinée à venir en appui sur cet épaulement 25.

La filière 40 comporte une ouverture centrale 41, de même diamètre que le support cylindrique rainuré 3, et alignée avec l'ouverture 21 de la filière 20. L'ouverture 41 présente une bordure intérieure pourvue de parties saillantes radiales 43, par exemple en forme de V, en nombre égal à celui des rainures 4 du support cylindrique 3 (dix dans l'exemple choisi), de sorte que chaque partie saillante 43 repose au fond d'une rainure 4 du support.

La filière 40 comporte également des encoches radiales 44, identiques à celles de la filière 20, et réparties suivant le même écartement angulaire que les parties saillantes 43 en forme de V de l'ouverture 41, et suivant le même écartement anglulaire que les encoches 23 de la filière 20. Ainsi, en sortie de la filière 20, chaque fibre optique 6 s'engage dans une encoche 44 de la filière 40 et vient se positionner par rapport à sa rainure correspndante 4 du support cylindrique 3. La filière 40 joue donc le rôle de filière de positionnement des fibres optiques par rapport aux rainures du support cylindrique.

La tête de pose 10 comporte de plus une quatrième filière cylindrique 50, par exemple en acier, de diamètre sensiblement supérieur à celui du support cylindrique rainuré 3, et pourvue d'une ouverture centrale 51 alignée avec les précédentes, permettant le passage du support 3. La filière 50 est solidaire d'une pièce formant monture annulaire 53 présentant un logement 54 destiné à recevoir la filière de positionnement 40.

Pour réaliser l'assemblage des trois filières 20, 40 et 50, on positionne la filière 40 dans le logement 54 de la monture 53, puis on applique ladite filière 40 sur l'épaulement 25 de la filière 20, permettant ainsi à la monture 53 de venir en butée sur la filière 20. Les trois filières sont ensuite solidarisées les unes autres par des moyens de fixation, tels que par exemple des vis 61 s'engageant dans des trous correspondants 62 pratiqués sur chacune des trois filières. Dès lors, les trois filières constituent un ensemble unitaire rigide.

Après le positionnement de chaque fibre optique 6 par rapport à une rainure 4 du support 3, la filière cylindrique 50 assure l'insertion ou la pose de chaque fibre dans la rainure correspondante du support 3. A leur sortie immédiate de la filière 50, chaque fibre optique 6 est maintenue en place

dans sa rainure 4 au moyen d'une enveloppe de protection (non représentée) enrobant le support 3 au fur et à mesure de son défilement.

On notera que les deux filières 40 et 50 peuvent chacune être réalisées en plusieurs parties déconnectables les unes des autres. Ceci a pour avantage de permettre un accès aisé à une fibre optique afin d'effectuer, par exemple, un nettoyage de celle-ci.

La tête de pose selon l'invention a été décrite ci-dessus en se référant à un support cylindrique creusé de dix rainures dans chacune desquelles est logée une fibre optique. Bien entendu, le nombre de rainures ainsi que le nombre de fibres par rainure ne sont nullement limitatifs; en particulier, la Demanderesse a utilisé un support cylindrique à douze rainures dans chacune desquelles sont logées trois fibres optiques par mise en oeuvre de la tête de pose selon l'invention.

La figure 3 représente une vue en coupe du dispositif de fabrication d'éléments de câblage incorporant la tête de pose montée tournante selon l'invention. Sur cette figure, dans laquelle les éléments identiques à ceux de la figure 2 sont désignés par le même repère, on a représenté en 66 un plateau entraîné en rotation à raison d'un tour par pas des rainures du support 3 défilant en translation. Les fibres optiques 6 sont fournies par des bobines 67 montées sur le plateau tournant 66, et sont orientées en faisceau en direction de la tête de pose 10. Sur le plateau 66 est montée solidairement une conduit ou axe creux 69 le traversant, permettant le défilement en translation du support cylindrique rainuré 3 fourni par une réserve (non représentée).

Comme il apparaît sur la figure 3, la tête de pose 10 est maintenue en place par des moyens de verrouillage, constitués par exemple par un système à baïonnette 70 monté sur une extrémité du tube 11. Les deux tétons 71 du système à baïonnette sont montés d'une façon dissymétrique sur la partie de tube 11a, jouant ainsi le rôle de détrompeur, ce qui permet un positionnement rapide et exact de la tête de pose. Lors du verrouillage de la tête de pose, la face terminale du tube 11 vient comprimer un ressort 72 monté dans le système à baïonnette 70.

Entre l'axe creux 69 et le système de verrouillage 70 sont montés fixement des moyens d'accouplement souple, constitués par exemple par un soufflet en bronze 74, et destinés à compenser d'eventuelles fluctuations de la position du support cylindrique 3 et notamment des décalages angulaires de ce support.

La ligne de fabrication comporte également un dispositif d'asservissement permettant de fixer la position angulaire de la tête de pose 10 par rapport au plateau 66. Ce dispositif comporte un capteur constitué par exemple par un potentiomètre 76 se présentant sous la forme d'un curseur 76a solidaire de l'axe creux 69 et se déplaçant sur une piste conductrice 76b munie d'une référence ou repérage destiné au redémarrage ultérieur du dispositif de fabrication. On notera que le potentiomètre 76 peut être à double piste, ou peut être remplacé par tout type de capteur, par exemple optique, sans sortir du cadre de l'invention.

Le capteur 76 délivre à sa sortie un signal alimentant une unité de traitement 78 qui commande le calage angulaire du plateau 66 par l'intermédiaire d'un moteur 79 couplé au plateau 66 par un engrenage (non représenté).

En sortie de la tête de pose 10, on a représenté en 81 un dispositif d'application d'une première enveloppe de protection 82 destinée à maintenir les fibres optiques 6 dans les rainures 4 du support cylindrique 3. L'élément de câble est ensuite terminé par la mise en place d'une seconde enveloppe de protection (non représentée).

On a donc réalisé suivant l'invention une tête de pose simultanée de fibres optiques dans un support cylindrique rainuré, particulièrement simple, très efficace, et avantageux du point de vue coût de fabrication.

## Revendications

1. Tête de pose simultanée de fibres optiques (6) dans des rainures (4) pratiquées sur le pourtour d'un support cylindrique (3), comportant un tube creux (11) traversé longitudinalement par le support défilant en continu, cette tête étant caractérisée par le fait qu'elle comporte:

— une première pièce en forme de rondelle (40), de diamètre supérieur à celui du tube (11), solidaire et axialement alignée avec le tube, et percée d'une ouverture centrale (41) permettant le passage du support (3), cette ouverture présentant une bordure intérieure pourvue de parties saillantes radiales (43) en nombre égal à celui des rainures (4) du support (3), de sorte que chaque partie saillante repose sensiblement au fond d'une rainure, cette pièce en forme de rondelle (40) comprenant des encoches radiales (44) pratiquées sur son pourtour et réparties suivant le même écartement angulaire que les parties saillantes (43) de la bordure, de sorte que chaque fibre optique (6) s'engage dans une encoche (44) et se positionne par rapport à une rainure (4) du support; et

— une pièce cylindrique (50) d'insertion des fibres optiques (6) dans les rainures (4) du support, rendue solidaire de la pièce en forme de rondelle (40), percée d'une ouverture centrale (51) alignée avec celle de la pièce en forme de rondelle, permettant le passage du support, cette pièce d'insertion (50) appliquant chaque fibre optique (6) dans une rainure (4) du support.

2. Tête selon la revendication 1, caractérisée par le fait qu'elle comporte également une pièce cylindrique (20) de centrage du support, de diamètre supérieur à celui du tube (11), montée coaxialement sur l'une des faces terminales du tube, et comprenant une ouverture centrale (21) alignée avec les précédentes, permettant le passage du support, et des encoches radiales (23) pratiquées sur le pourtour de la pièce de centrage, réparties suivant le même écartement angulaire que les encoches (44) de la pièce en forme de rondelle (40), et dans lesquelles s'engagent les fibres optiques, la pièce en forme de rondelle (40) étant montée en appui sur la face de la pièce de centrage (20) opposée à celle disposée sur le tube.

3. Tête selon la revendication 2, caractérisée par le fait qu'elle comporte de plus une seconde pièce en forme de rondelle (30) fixée coaxialement sur le tube (11), disante de la pièce de centrage (20), et percée d'orifices (32) répartis sur son pourtour sensiblement suivant le même écartement angulaire que les encoches (23) de la pièce de centrage (20), de sorte que chaque fibre optique (6) pénètre dans un orifice (32) en étant prépositionnée angulairement.

4. Tête selon l'une des revendications 2 à 3, caractérisée par le fait que la pièce d'insertion (50) est solidaire d'une pièce formant monture annulaire (53) comprenant un logement (54) destiné à recevoir la première pièce en forme de rondelle (40).

5. Tête selon l'une des revendications 2 à 4, caractérisée par le fait que la pièce de centrage (20) a sensiblement la forme d'une rondelle dans laquelle sont pratiquées les encoches radiales (23), et comportant un épaulement circulaire (25) sur lequel prend appui la première pièce en forme de rondelle (40).

6. Tête selon l'une des revendications 2 à 5, caractérisée par le fait qu'elle comporte des moyens (61) pour solidariser la pièce formant monture (53) avec le pièce de centrage (20) de sorte que, la première pièce en forme de rondelle étant disposée dans le logement de la pièce formant monture, la pièce de centrage (20), la première pièce en forme de rondelle (40) et la pièce formant monture (53) forment un ensemble unitaire rigide.

7. Tête selon l'une des revendications 4 à 6, caractérisée par le fait que le tube (11) et la pièce de centrage (20) forment une même pièce, et en ce que la pièce formant monture (53) et la pièce d'insertion (50) forment également une même pièce.

8. Dispositif de fabrication d'éléments de câblage, caractérisé par le fait qu'il comporte une tête de pose (10) selon l'une quelconque des revendications 2 à 7.

9. Dispositif selon la revendication 8, comportant une tête de pose tournante (10) et un plateau tournant (66) supportant des bobines (67) de fibres optiques, la tête de pose (10) étant reliée mécaniquement à un axe creux (69) solidaire du plateau et dans lequel défile le support (3), caractérisé par le fait qu'il comporte des moyens (76, 78, 79) pour asservir angulairement la tête de pose (10) par rapport au plateau (66).

10. Dispositif selon la revendication 9, caractérisé par le fait que les moyens d'asservissement comportent un capteur (76) rendu solidaire de l'axe creux (69) et commandant un moteur (79) d'entraînement en rotation du plateau (66).

11. Dispositif selon l'une des revendications 9 à 10, caractérisé par le fait qu'il comporte de plus des moyens de vorrouillage (70) de la tête de pose (10) par rapport à l'axe creux (69), montés sur l'extrémité du tube (11) de la tête de pose opposée à celle supportant la pièce de centrage (20), et rendus solidaires de l'axe creux.

12. Dispositif selon la revendication 11, caractérisé par le fait que les moyens de verrouillage sont constitués par un système à baïonnette (70) dont les deux tétons (71) sont fixés d'une façon dissymétrique sur le tube (11) de la tête de pose (10).

13. Dispositif selon l'une des revendications 11 à 12, caractérisé par le fait qu'il comporte des moyens d'accouplement souple (74) montés solidairement entre les moyens de vorrouillage (70) et l'axe creux (69), le support (3) traversant longitudinalement les moyens d'accouplement (74) et les moyens de verrouillage (70).

**Patentansprüche**

1. Kopf zum gleichzeitigen Verlegen von Lichtleitfasern (6) in Nuten (4), die sich auf dem Umfang eines zylindrischen Trägers (3) befinden, mit einem hohlen Rohr (11), das in Längsrichtung von dem Träger kontinuierlich durchlaufen wird, wobei dieser Kopf dadurch gekennzeichnet ist, daß er aufweist:

— ein erstes Stück in Form einer Scheibe (40), deren Durchmesser größer als der des Rohrs (11) ist, die fest mit dem Rohr verbunden ist und axial mit ihm fluchtet, und eine zentrale Öffnung (41) aufweist, die die Durchführung des Trägers (3) ermöglicht und einen inneren Rand aufweist, der mit radial vorstehenden Teilen (43) in gleicher Anzahl wie die Anzahl der Nuten (4) des Trägers (3) ausgestattet ist, derart, daß jedes vorsehende Teil im wesentlichen am Boden einer Nut ruht, wobei dieses scheibenförmige Stück (40) radiale Einkerbungen (44) auf seinem Umfang aufweist, die gemäß dem gleichen Winkelabstand wie die vorstehenden Teile (43) des Öffnungsrands verteilt sind, so daß jede Lichtleitfaser (6) in einer Einkerbung (44) verläuft und sich in bezug auf eine Nut (4) des Trägers ausrichtet,

— und ein zylindrisches Stück (50) zum Einführen der Lichtleitfasern (6) in die Nuten (4) des Trägers, wobei dieses Stück fest mit dem scheibenförmigen Stück (40) verbunden und mit einer zentralen Öffnung (51) versehen ist, die mit der des scheibenförmigen Stücks fluchtet und die Durchführung des Trägers ermöglicht, derart, daß dieses Einführstück (50) jede Lichleitfaser (6) in eine Nut (4) des Trägers drückt.

2. Kopf nach Anspruch 1, dadurch gekennzeichnet, daß er außerdem ein zylindrisches Zentrierstück (20) für den Träger aufweist, dessen Durchmesser größer ist als der des Rohrs und das koaxial an einer der Endseiten des Rohrs angebracht ist und eine zentrale Öffnung (21) aufweist, die mit den genannten Öffnungen fluchtet und die Durchführung des Trägers ermöglicht, daß dieses Zentrierstück mit radialen Einkerbungen auf seinem Umfang versehen ist, die gemäß dem gleichen Winkelabstand wie die Einkerbungen (44) des scheibenförmigen Stücks (40) angeordnet sind und in die die Lichtleitfasern eingelegt sind, und daß das scheibenförmige Stück (40) auf derjenigen Seite des Zentrierstücks (20) anliegt, die der am Rohr anliegenden Seite entgegengesetzt ist.

3. Kopf nach Anspruch 2, dadurch gekennzeichnet, daß er weiter ein zweites scheibenförmiges Stück (30) aufweist, das koaxial auf dem Rohr (11) und enfernt vom Zentrierstück (20) befestigt ist und Löcher (32) rund herum aufweist, die im wesentlichen dem gleichen Winkelabstand folgen wie die Einkerbungen (23) des Zentrierstücks (20), so daß jede Lichtleitfaser (6) in eines der Löcher (32) eindringt und dadurch winkelmäßig vorpositioniert wird.

4. Kopf nach einem der Ansprüche 2 bis 3, dadurch gekennzeichnet, daß das Einführstück (50) fest mit einem Bauteil verbunden ist, das einen ringförmigen Rahmen (53) und eine Aushöhlung (54) besitzt, in die das erste scheibenförmige Stück (40) hineinpaßt.

5. Kopf nach einem der Ansprüche 2 bis 4, dadurch gekennzeichnet, daß das Zentrierstück (20) im wesentlichen die form einer Scheibe hat, die die radialen Einkerbungen (23) aufweist und die eine kreisförmige Schulter (25) aufweist, auf der sich das erste scheibenförmige Stück (40) abstützt.

6. Kopf nach einem der Ansprüche 2 bis 5, dadurch gekennzeichnet, daß er Mittel (61) aurweist, um das den Rahmen bildende Teil (53) mit dem Zentrierstück (20) so fest zu verbinden, daß, wenn das erste scheibenförmige Stück sich der Aushöhlung des den Rahmen bildenden Bauteils befindet, das Zentrierstück (20), das erste scheibenförmige Stück (40) und das den Rahmen bildende Bauteil (53) eine starre Einheit bilden.

7. Kopf nach einem der Ansprüche 4 bis 6, dadurch gekennzeichnet, daß das Rohr (11) und das Zentrierstück (20) ein gemeinsames Teil bilden, und daß das den Rahmen bildende Bauteil (53) und das Einführstück (50) ebenfalls aus einem Stück sind.

8. Vorrichtung zur Herstellung von Kabelementen, dadurch gekennzeichnet, daß sie einen Verlegekopf (10) gemäß einem der Ansprüche 2 bis 7 aufweist.

9. Vorrichtung nach Anspruch 8, mit einem drehenden Verlegekopf (10) und einer drehenden Platte (66), die Lichtleitfaserspulen (67) trägt, wobei der Verlegekopf (10) mechanisch mit einer hohlen Achse (69) verbunden ist, die fest mit der Platte gekoppelt ist und durch die der Träger (3) hindurchgleitet, dadurch gekennzeichnet, daß sie Mittel (76, 78, 79) aufweist, um den Verlegekopf (10) winkelmäßig in bezug auf die Platte (66) nachzuregeln.

10. Vorrichtung nach Anspruch 9, dadurch gekennzeichnet, daß die Nachregelmittel eine Sonde (76) aufweisen, die mit der hohlen Achse (69) fest verbunden ist und einen Motor (79) steuert, der die Platte (66) in Drehung versetzt.

11. Vorrichtung nach einem der Ansprüche 9 bis 10, dadurch gekennzeichnet, daß sie außerdem Blockiermittel (70) für den Verlegekopf (10) in bezug auf die hohle Achse (69) aufweist die auf demjenigen Ende des Rohrs (11) des Verlegekopfes angebracht sind, das dem entgegengesetzt ist, welches das Zentrierstück (20) trägt, und daß diese Blockiermittel mit der hohlen Achse fest verbunden sind.

12. vorrichtung nach Anspruch 11, dadurch gekennzeichnet, daß die Blockiermittel aus einem Bajonettsystem (70) bestehen, dessen beide Blockierstifte (71) asymmetrisch auf dem Rohr (11) des Verlegekopfes (10) befestigt sind.

13. Vorrichtung nach einem der Ansprüche 11 bis 12, dadurch gekennzeichnet, daß sie biegsame Koppelmittel (74) aufweist, die fest zwischen den Blockiermitteln (70) und der hohlen Ashse (69) angebracht sind, wobei der Träger (3) die Koppelmittel (74) und die Blockiermittel (70) in Längsrichtung durchquert.

**Claims**

1. A head for the simultaneous insertion of optical fibres (6) into grooves (4) on the periphery of a cylindrical support (3), comprising a hollow tube (11) which is longitudinally traversed by the continuously defiling support, this head being characterized in that it comprises:
— a first piece in the form of a disc (40), of a larger diameter than that of the tube (11), integral with and axially aligned to the tube, having a central opening (41) permitting the passage of the support (3), this opening presenting an inner rim provided with radial projecting parts (43), the number of which is equal to that of the grooves (4) of the support (3), so that each projecting part bears essentially on the bottom of a groove, this piece in the form of a disc (40) comprising radial notches (44) on its periphery and disposed according to the same angular distance as the projecting parts (43) of the rim, so that each optical fibre (6) engages into a notch (44) and is positioned with respect to a groove (4) of the support,
— and a cylindrical piece (50) for the insertion of optical fibres (6) into the grooves (4) of the support, this piece being made integral with the piece in the form of a disc (40) and having a central opening (51) aligned with that of the piece in the form of a disc for permitting the passage of the support, this insertion piece (50) applying each optical fibre (6) into a groove (4) of the support.

2. A head according to claim 1, characterized in that it further comprises a cylindrical piece (20) for centering the support, of a larger diameter than that of the tube (11), mounted coaxially on one of the end sides of the tube, and comprising a central opening (21) aligned with the preceding openings and permitting the passage of the support, and comprising radial notches (23) on the periphery of the centering piece, disposed along the same angular distance as the notches (44) of the piece in the form of a disc (40) and in which are inserted the optical fibres, the piece in the form of a disc (40) bearing against the face of the centering piece (20) which is opposed to that disposed on the tube.

3. A head according to claim 2, characterized in that it further comprises a second piece in the form of a disc (30) fixed coaxially on the tube (11), distant from the centering piece (20) and with openings (32) distributed on its periphery essentially according to the same angular distance as the notches (23) of the centering piece (20), so that each optical fibre (6) penetrates into an opening (32) while being prepositioned angularly.

4. A head according to one of claims 2 to 3, characterized in that the insertion piece (50) is integral with a piece forming an annular frame (53) which comprises a housing (54) shaped to receive the first piece in the form of a disc (40).

5. A head according to one of the claims 2 to 4, characterized in that the centering piece (20) has essentially the form of a disc in which are cut the radial notches (23), and comprises a circular shoulder (25) on which bears the first piece in the form of a disc 40.

6. A head according to one of the claims 2 to 5, characterized in that it comprises means (61) for attaching the piece forming frame (53) to the centering piece (20) so that, the first piece in the form of a disc being disposed in the housing of the piece forming frame, the centering piece (20), the first piece in the form of a disc (40) and the piece forming a frame (53) constitute a rigid unitary assembly.

7. A head according to one of claims 4 to 6, characterized in that the tube (11) and the centering piece (20) form an integral piece, and in that the piece forming a frame (53) and the insertion piece (50) equally form an intregral piece.

8. A device for manufacturing cable elements, characterized in that it comprises an insertion head (10) according to one of the claims 2 to 7.

9. A device according to claim 8, comprising a rotating insertion head (10) and a rotating plate (66) supporting coils (67) of optical fibres, the insertion head (10) being connected mechanically to a hollow axis (69) which is integral with the plate and in which defiles the support (3), characterized in that it comprises means (76, 78, 79) for angularly adjusting the insertion head (10) with respect to the plate (66).

10. A device according to claim 9, characterized in that the adjusting means comprising a probe (76) which is integral with the hollow axis (69) and controls a motor (79) driving the plate (66).

11. A device according to one of claims 9 to 10, characterized in that it further comprises means (70) for blocking the insertion head (10) with respect to the hollow axis (69), these means being mounted on the end of the tube (11) of the insertion head opposed to that end which supports the centering piece (20), these means being made integral with the hollow axis.

12. A device according to claim 11, characterized in that the blocking means are constituted by a bayonet sysetm (70), the two pins (71) of which are fixed asymmetrically on the tube (11) of the insertion head (10).

13. A device according to one of the claims 11 to 12, characterized in that it comprises means (74) for a resilient coupling, mounted rigidly between the blocking means (70) and the hollow axis (69), the support (3) passing longitudinally through the coupling means (74) and the blocking means (70).

# FIG_1

# FIG_2

FIG_3